# EUROPEAN PATENT SPECIFICATION

(11) **EP 2 986 453 B1**
(45) Date of publication and mention of the grant of the patent: **01.05.2019**
(21) Application number: 13745747.9
(22) Date of filing: 22.07.2013
(51) Int. Cl.: B32B 27/12, B32B 15/14, B32B 17/04, B32B 7/12, B32B 27/28, B32B 15/20, B32B 5/02

(54) **BURNTHROUGH RESISTANT LAMINATE FILM**
DURCHBRENNFESTE MEHRLAGIGE FOLIE
FILM MULTICOUCHE RÉSISTANT À LA PERFORATION PAR LE FEU

(30) Priority: 18.04.2013 US 201361813279 P
(43) Date of publication of application: 24.02.2016
(73) Proprietor: Brook One Corporation, Markham, Ontario L3T 1K1 (CA)
(72) Inventor: ZHENG, Zheng, Catonsville, Maryland 21228 (US); LI, Qin Jian, Markham, Ontario L3T 1K1 (CA)
(74) Representative: Mewburn Ellis LLP
(86) International application number: PCT/US2013/051476
(87) International publication number: WO 2014/171957

(56) References cited:
- US-A- 4 501 787
- US-A- 4 769 270
- US-A- 5 126 192
- US-A- 5 435 877
- US-A1- 2001 053 447
- US-A1- 2005 080 183
- US-A1- 2006 234 027
- US-A1- 2007 077 413
- US-A1- 2007 193 683
- US-A1- 2009 266 591
- DATABASE WPI Week 198848 Thomson Scientific, London, GB; AN 1988-340510 XP002715380, & JP S63 250188 A (MITSUBISHI PLASTICS IND LTD) 18 October 1988 (1988-10-18)
- DATABASE WPI Week 201027 Thomson Scientific, London, GB; AN 2010-E08236 XP002715381, -& JP 2010 084085 A (HITACHI CHEM CO LTD) 15 April 2010 (2010-04-15)

## Description

### Background

Thermal acoustic insulation is used extensively throughout an aircraft's fuselage for the purpose of reducing noise entering the cabin from external sources and also serves to maintain comfortable cabin temperatures. Thermal acoustic insulation (i) creates a barrier to prevent or reduce the transfer of heat and/or flames, and (ii) attenuates outside noise to allow reasonable levels of comfort and verbal communication inside the passenger cabin and flight deck.

The Federal Aviation Administration (FAA) has promulgated regulations requiring thermal acoustic insulation materials used in commercial aircraft to provide burn through protection and flame propagation resistance. Currently, thermal acoustic insulation, insulation covering, and insulation blankets must be tested in accordance with Federal Aviation Regulation (FAR) §25.856 and 14 C.F.R. § 25, appendix F Part VII and Advisory Circular 25.56-2A.

Historically, both functions have been provided by fiberglass batting encapsulated in plastic moisture barrier film coverings. Film covering materials consist of polyester terepthalate (PET), polyvinyl fluoride (PVF), and to a lesser degree, polyimide. Although these materials are required to meet a vertical Bunsen burner test, some have been found to propagate fire under certain conditions.

US 4769270 describes a substrate for a printed circuit board comprising a metal core plate having apertures and an inorganic fiber cloth impregnated with heat resistant thermoplastic resin coated thereon, wherein the apertures are filled with a mixture of the resin and an inorganic filler.

### Brief Description of the Drawings

Figure 1 is a cross-sectional view of a burnthrough resistant laminate according to one embodiment of the present invention.
Figure 2A is a top view of a plain weave according to one embodiment of the present invention.
Figure 2B is a top view of a basket weave according to one embodiment of the present invention.
Figure 3 is a cross-sectional view of an adhesive according to one embodiment of the present invention.
Figure 4 is a cross-sectional view of a burnthrough resistant laminate according to one embodiment of the present invention.
Figure 5 is a flow chart of a method for laminating a burnthrough resistant film according to one embodiment of the present invention.

### Detailed Description

The present invention relates to making burnthrough resistant laminate films with superior strength, tear resistance, flexibility, scratch resistantce, and water/solvent resistance. The disclosed burnthrough resistant laminate can be implemented in thermal acoustic systems used in commercial aircraft and other applications needing burnthrough resistant properties currently mandated for commercial aircraft. The disclosed laminate film can meet or exceed current Federal Aviation Administration rules and requirements of improved flammability standards for thermal/acoustic insulation materials used in transport category aircraft.

Embodiments of the laminate include a glass cloth layer, a fire retardant adhesive compounded with inorganic fillers, and a pair of fire propagation resistant films. In one embodiment, the glass cloth layer can be sandwiched between the pair of fire propagation resistant films. The fire retardant adhesive can be coated on each side of the glass cloth layer and on a surface of each fire propagation resistant film.

Embodiments of the laminate film can have significantly better resistance to physical abuse compared to traditional burnthrough resistant laminates including those made with fire blocking paper as its core.

Generally, a weaving process can be implemented such that the glass cloth has a high density and decreased thickness while maintaining a same area weight of other weaving techniques.

In one embodiment, the glass cloth can be woven with glass fibers made from alkali glass or alkaline earth glass. The glass cloth can then be leached in acidic conditions to form a high purity silicon dioxide (SiO₂) glass cloth. The high purity SiO₂ glass fibers can have a higher softening temperature (or glass transition temperature) than a flame temperature present in standard burn through tests. For instance, the high purity glass cloth can resist 1100 C° heat without loss of structural integrity. As such, the glass cloth can prevent flame penetration for more than 15 minutes, in some instances, when tested in a standard burn through test. The burnthrough resistant laminate film can block flame penetration and limit heat transfer (e.g., less than 23 kW/m² (2 BTU/ft²s) in 4 minutes). In addition, inorganic filler including, but not limited to, mica, vermiculite, silica microfiber, fumed silica, titanium dioxide, and ceramic fiber is compounded with the adhesive to reduce heat transfer.

Based on specifications and requirements of a commercial aircraft manufacturer, an area weight of the burnthrough resistant laminate can be controlled. For example, an area weight of 2.9 oz./sq. yard ± 0.2 oz./sq. yard (98.3 g/m² ± 6.8 g/m²) is typical. In one embodiment, the glass fiber tex and type of weave can be selected to meet those specifications. It is to be appreciated that the burnthrough resistant laminate film can have an area weight between 2 oz./sq. yard to 10 oz./sq. yard (67.8 g/m² to 339.0 g/ m²). Generally, the burnthrough resistant laminate film can have a specific area weight lower than a set standard and can pass a burn through resistance test by the Federal Aviation Administration.
The invention is defined by the claims.

### Terminology

The terms and phrases as indicated in quotation marks (" ") in this section are intended to have the meaning ascribed to them in this Terminology section applied to them throughout this document, including in the claims, unless clearly indicated otherwise in context. Further, as applicable, the stated definitions are to apply, regardless of the word or phrase's case, to the singular and plural variations of the defined word or phrase.

The term "or" as used in this specification and the appended claims is not meant to be exclusive; rather the term is inclusive, meaning either or both.

References in the specification to "one embodiment", "an embodiment", "another embodiment, "a preferred embodiment", "an alternative embodiment", "one variation", "a variation" and similar phrases mean that a particular feature, structure, or characteristic described in connection with the embodiment or variation, is included in at least an embodiment or variation of the disclosure.The phrase "in one embodiment", "in one variation" or similar phrases, as used in various places in the specification, are not necessarily meant to refer to the same embodiment or the same variation.

The term "couple" or "coupled" as used in this specification and appended claims refers to an indirect or direct physical connection between the identified elements, components, or objects. Often the manner of the coupling will be related specifically to the manner in which the two coupled elements interact.

The term "directly coupled" or "coupled directly," as used in this specification and appended claims, refers to a physical connection between identified elements, components, or objects, in which no other element, component, or object resides between those identified as being directly coupled.

The term "approximately," as used in this specification and appended claims, refers to plus or minus 10% of the value given.

The term "about," as used in this specification and appended claims, refers to plus or minus 20% of the value given.

The terms "generally" and "substantially," as used in this specification and appended claims, mean mostly, or for the most part.

The term "cloth," as used in the specification and appended claims, refers to a pliable material made by weaving, felting, or knitting natural or synthetic fibers or filaments.

Directional and/or relationary terms such as, but not limited to, left, right, nadir, apex, top, bottom, vertical, horizontal, back, front and lateral are relative to each other and are dependent on the specific orientation of a applicable element or article, and are used accordingly to aid in the description of the various embodiments and are not necessarily intended to be construed as limiting.

### A First Embodiment of a Laminate Film

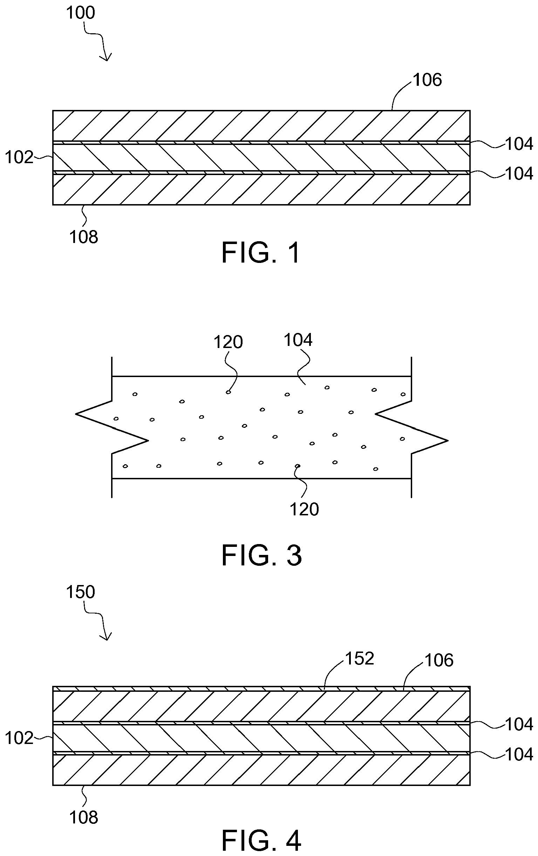

Referring to Figure 1, a detailed diagram of an embodiment 100 showing a burnthrough resistant laminate film is illustrated. The burnthrough resistant laminate film 100 can be implemented as thermal acoustic insulation for various types of vehicles. For instance, the burnthrough resistant laminate film 100 can be implemented in vehicles including, but not limited to, airplanes, trains, and ships.

As shown, the laminate film 100 generally includes a glass layer 102, an adhesive 104, a first film 106, and a second film 108.

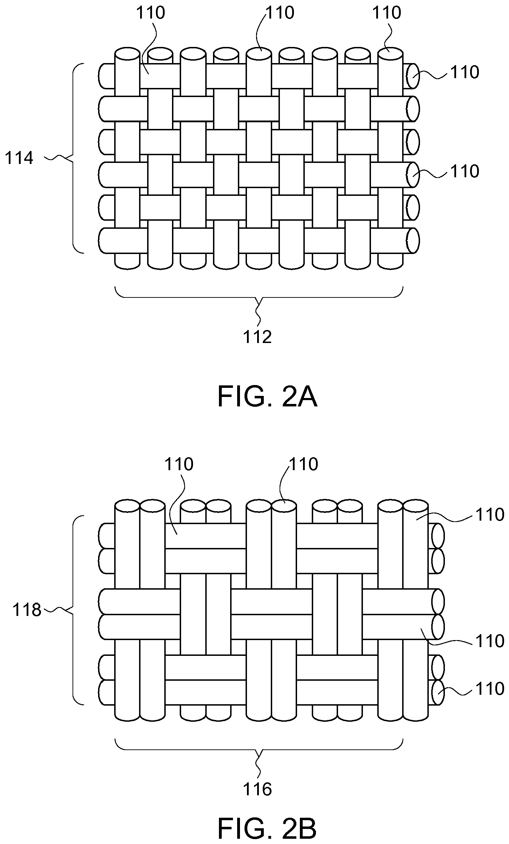

In one embodiment, the glass layer 102 can be a burnthrough resistant glass cloth generally comprising a plurality of weaved glass rovings 110, as shown in Figures 2A-2B. Generally, silicon dioxide filaments having a predetermined diameter can be bundled into a roving to form each of the glass rovings 110. In one example, each of the filaments of the glass rovings 110 can have an 11 µm diameter. It is to be appreciated that the number of filaments and diameter of the filaments can determine a linear mass density in tex (g/1000m) of the glass rovings 110.

Generally, a weaving process can be implemented to form the glass cloth 102. In one embodiment, a plain weave can be implemented. It is to be appreciated that a plain weave can be referred to as a tabby weave, linen weave, or taffeta weave. In a plain weave, a warp and a weft can be aligned so that the warp and the weft form a simple criss-cross pattern.

After the glass cloth 102 has been woven, the glass cloth 102 can be introduced to an acidic solution and leached. Generally, the glass cloth 102 can be leached in the acidic solution until the silicon dioxide filaments have reached at least 92% purity. The acidic solution can include, but is not limited to, a H₂SO₄ solution, a HCl solution, a HBr solution, a HNO₃ solution, and a H₃PO₄ solution.

Generally, the burnthrough resistant glass cloth 102 can comprise 92-99.98% pure silicon dioxide after being leached in an acidic solution. Generally, the glass rovings 110 can have a linear mass density between 10-25 tex and each filament can have a diameter between 5-19 µm.

In one embodiment, the burnthrough resistant glass cloth 102 can comprise glass rovings in a plain weave. The glass rovings can include 94-98% pure silicon dioxide filaments after being leached in an acidic solution. The glass rovings can have a linear mass density of 14-22 tex and each filament can have a diameter between 7-15 µm.

Referring to Figure 2A, a detailed diagram of a plurality of glass rovings 110 in a plain weave is illustrated. For purposes of this description, the glass rovings 110 in a vertical orientation can be referred to as weft rovings 112 and the glass rovings 110 in a horizontal orientation can be referred to as warp rovings 114.

In one embodiment, the plurality of weft rovings 112 can interleave with the plurality of warp rovings 114. For instance, a weft roving can go over a warp roving, then under another roving, and so on. Another weft roving can go under the warp roving that the previous weft roving went over, and vice versa. Some embodiments can use a balanced plain weave in which the warp rovings 112 and the weft rovings 114 have an equal area weight and an equal number of ends per inch and picks per inch. It is to be appreciated that the number of ends of the warp may not coincide with the number of picks of the weft. For instance, there can be more ends than picks or vice versa. In one embodiment, the ratio of ends to picks can be based on fire resistance performance.

In one embodiment, the glass cloth 102 can be woven where the warp rovings 112 have predetermined picks (number of rovings/inch or number of rovings/2.54 cm) and the weft rovings have predetermined ends (number of rovings/inch or number of rovings/2.54 cm). Generally, a density and area weight of the glass cloth 102 can be determined by the picks and ends. It is to be appreciated that higher picks and ends can generate a denser and higher area weight at the same tex of a roving. For instance, for a specified density, a lower area weight needs a lower tex for the roving. A lower area weight can often be a requirement in high performance applications. Generally, as tex is decreased, process issues including, but not limited to, breakage in weaving can occur.

Some embodiments of the present invention can implement a basketweave, as shown in Figure 2B, where the glass rovings 110 can be bundled and then woven as one in a warp and/or weft. Generally, at least two or more glass rovings 110 can be coupled and then woven as one in a plain weave cloth. As shown, bundled warp rovings 116 can interleave with bundled weft rovings 118. It is to be appreciated that Figure 2A and Figure 2B are for illustrative purposes only and are not meant to be limiting.

Referring to Figure 3, a detailed diagram of the adhesive 104 is illustrated. As shown, the adhesive 104 includes a filler 120. In one embodiment, the adhesive 104 can be selected from a group including, but not limited to, polymers, copolymers, and/or terpolymers. It is to be appreciated that any polymer selected can be inherently fire retardant and/or modified with fire retardants. The polymer can include, but is not limited to, polyvinylchloride, polyethylene-vinyl chloride, polyacrylate, polyurethane, polyacrylamide, etc. Fire retardants can include, but are not limited to, melamine, melamine derivatives, melamine/formaldehyde based resins, phosphorous compounds, phosphates, borates, and halogenated compounds.

In one embodiment, the adhesive 104 can be a non-reactive adhesive. For instance, the adhesive 104 can be a drying adhesive including, but not limited to, an emulsion adhesive. In one example, the adhesive 104 can be a polymer dispersion adhesive where one of the aforementioned polymers is dispersed in a solvent (e.g., water). For instance, the adhesive 104 can be in a water soluble or solvent soluble liquid state. Generally, as the solvent evaporates, the adhesive can harden. In one embodiment, the adhesive 104 can be a self-crosslinking pressure sensitive adhesive.

In one embodiment, the adhesive 104 can be applied by dipping the glass cloth 102 into a vat of the liquid adhesive 104. In another embodiment, the adhesive 104 can be impregnated into the glass cloth 102 by one or more compressive rollers.

As stated previously, the adhesive 104 is compounded with inorganic fillers. Generally, the inorganic filler 120 can comprise 5-15% of a solid weight of the adhesive 104. In one embodiment, the filler 120 can comprise 8-11% of the solid weight of the adhesive 104. It is to be appreciated that inorganic fillers can be selected based on materials that enhance fire resistance performance and reduce heat transfer. Generally, the inorganic filler 120 can fill small apertures or holes in the glass cloth 102 thereby enhancing fire penetration resistance. The inorganic filler 120 can include, but is not limited to, sheet silicate minerals, phyllosilicate, mica, vermiculite, silica microfiber, fumed silica, titanium dioxide, ceramic fiber, and combinations thereof. Vermiculite can fill small apertures of the woven glass and can expand greatly when heated providing enhanced fire penetration resistance. Titanium dioxide has a high temperature stability and a high refractive index which can be effective in blocking radiation heat transfer.

Generally, the filler 120 can be between 100-600 mesh (100-600 openings per 2.54 cm of mesh) in size. In such a range, the filler 120 can provide a smooth surface along with filling capabilities. In some instances, a high-temperature microfiber including, but not limited to, ceramic fiber or silicon dioxide fiber can be implemented as the filler 120 in the adhesive 104.

In one embodiment, the adhesive 104 can be a water based polyethylene-vinyl chloride emulsion. The emulsion can include vermiculite as the filler 120. In another embodiment, the emulsion can include mica as the filler 120.

Generally, the glass cloth 102 can be impregnated with the adhesive 104 and the filler 120 by soaking the glass cloth 102 in the adhesive 104. For instance, the glass cloth 102 can be introduced into a vat of the adhesive 104. In one example, the glass cloth 102 can be directed to a tank filled with the filler enhanced adhesive 104 for impregnating. After leaving the tank, the glass cloth can be passed through a pair of rollers. The rollers can be implemented to control the amount of adhesive applied to the glass cloth 102. The impregnated glass cloth can then be sent to a heating device for drying.

The first film 106 and the second film 108 can be manufactured from
polyetheretherketone (PEEK). Generally, the first film 106 and the second film 108 can have a thickness ranging from 3-9 µm. It is to be appreciated that the thickness of the first film 106 and the second film 108 can be increased or decreased without exceeding the scope of the present invention.

Generally, the impregnated glass cloth 102 can be sandwiched between the first film 106 and the second film 108, as shown in Figure 1. In some embodiments, a surface of the first film 106 and a surface of the second film 108 can be coated with the adhesive 104.

### A Second Embodiment of a Laminate Film

Referring to Figure 4, a detailed diagram of a burnthrough resistant laminate film 150 is illustrated. The burnthrough resistant laminate film 150 can include the first embodiment laminate film 100 and a fire retardant adhesive 152. Generally, the adhesive 152 can be similar to the previously disclosed first embodiment adhesive 104. In one embodiment, the adhesive 152 can have an area weight between a range of 5-20 g/m². In another embodiment, the adhesive 152 can have an area weight between 10-15 g/m².

In one embodiment, after the first embodiment laminate film 100 has been laminated, a surface of one side of the first embodiment laminate film 100 can be coated with the fire retardant adhesive 152. Generally, the adhesive 152 can be implemented to thermally and/or ultrasonically seal the second embodiment laminate film 150 to an insulation of a vehicle.

In some embodiments, the adhesive 152 can be applied to the first film 106 before the laminating process. For instance, the inorganic filler enhanced adhesive 104 can be applied to a surface of one side of the first film 106 and the fire retardant adhesive 152 can be applied to a surface of another side of the first film 106. It is to be appreciated that the adhesive 152 can be applied to an outer surface of the second film 108.

### A Plurality of Burnthrough Resistant Laminate Film Examples

In a first example, the glass cloth 102 can comprise plain weaved silicon dioxide rovings with fibers being greater than 97% pure silicon dioxide. The glass cloth 102 can have an area weight of 59 g/m². The adhesive 104 can be comprised of a 30% solid binder solution of Vinnol 4500 (polyethylene vinyl chloride) containing 1% Z6040 silane, 0.5% dispersing agent, and 10% 300 mesh (300 openings per 2.54 cm) mica filler.

The glass cloth 102 can be impregnated with the adhesive 104. The impregnated glass cloth 102 can be dried by passing the glass cloth 102 through an oven. A total weight/area for the impregnated glass cloth 102 can be controlled at about 64 g/m².

The first film 106 and the second film 108 can each comprise a polyetheretherketone (PEEK) film with a thickness of 6 µm. The first film 106 and the second film 108 can be coated with the same binder solution as the glass cloth 102. Generally, the first film 106 and the second film 108 can be dried via heated air after being coated with the adhesive 104. Generally, a coating weight can be controlled at about 8 g/m² for the first film 106 and the second film 108. The impregnated glass cloth 102 can be sandwiched between the first film 106 and the second film 108 and fused together with a rolling laminator under a pressure of 50 psi (0.345 MPa) and at a temperature of 150 C°.

In a second example, the glass cloth 102 can comprise the same material as in the first example. The adhesive can be comprised of a 30% solid binder solution of Vinnol 4500 (polyethylene vinyl chloride) containing 1% Z4060 silane, 0.5% dispersing agent, and 10% 300 mesh (300 openings per 2.54 cm) vermiculite filler. The first film and the second film can each comprise a PEEK film with a thickness of 6 µm.

In a third example, the glass cloth 102 can comprise the same material as in the first and second examples. The adhesive can be comprised of a 30% solid binder solution of Vinnol 4500 (polyethylene vinyl chloride) containing 1% Z6040 silane, 0.5% dispersing agent, and 10% silica microfiber filler. The first film and the second film can each comprise a PEEK film with a thickness of 6 µm.

In a fourth example (not according to the invention), the glass cloth 102 can comprise the same material as in the first, second, and third examples. The adhesive can be comprised of a 30% solid binder solution of Vinnol 4500 (polyethylene vinyl chloride) containing 1% Z6040 silane, 0.5% dispersing agent, and 10% silica microfiber filler. The first film can comprise a PEEK film with a thickness of 6 µm. The second film can comprise an aluminum foil film with a thickness of 6 µm. It is to be appreciated that the first film can comprise the aluminum foil film and the second film can comprise the PEEK film.

In a fifth example (not according to the invention), the glass cloth 102 can comprise the same material as in the first through fourth examples. The adhesive can be comprised of a 30% solid binder solution of Vinnol 4500 (polyethylene vinyl chloride) containing 1% Z6040 silane, 0.5% dispersing agent, and 10% 300 mesh (300 openings per 2.54 cm) mica filler. The first film and the second film can each comprise a polyphenylene sulfide (PPSD) film with a thickness of 4 µm. solution of Vinnol 4500 (polyethylene vinyl chloride) containing 1% Z6040 silane,

In a sixth example (not according to the invention), the glass cloth layer 102 can comprise the same material as in the first through fifth examples. The adhesive can be comprised of a 30% solid binder solution of Vinnol 4500 (polyethylene vinyl chloride) containing 1% Z6040 silane, 0.5% dispersing agent, 5% titanium dioxide (e.g., DuPont Ti-pure R900), and 5% silica microfiber fillers. The first film and the second film can each comprise of a polyphenylene sulfide (PPSD) film with a thickness of 4 µm.

Referring to TABLE 1, area weight, tensile strength, ply bond strength, and water absorption statistics are shown for the burnthrough resistant laminate films as described in examples 1-6.

**TABLE 1**

| Example No. | Area Weight (g/m²) | Tensile Strength Warp (lb/in) (0.45kg/2.54cm)/ Weft (lb/in) (0.45kg/2.54cm) | Ply Bond Strength (lb/in) (0.45kg/2.54cm) | Water Absorption (96hr) % |
|---|---|---|---|---|
| 1 | 97.1 | 55.3/49.2 | 13.5 | 32.3 |
| 2 | 96.2 | 66.8/58.9 | 12.4 | 34.2 |
| 3 | 98.9 | 63.2/60.1 | 14.6 | 33.1 |
| 4 | 108.9 | 52.3/50.1 | 10.0 | 30.1 |
| 5 | 99.9 | 60.2/56.9 | 14.1 | 35.5 |
| 6 | 97.5 | 56.0/51.3 | 13.0 | 34.1 |

A flammability and flame propagation test according to FAR Appendix F Part VI was conducted for the laminate film from example one. The test resulted in a pass for the laminate film with a flame propagation distance of less than 0.75 inches (1.91 cm) and zero after flame. A vertical flammability test was also completed for the laminate film from example one. The test resulted in a pass for the laminate film. Test results showed an extinguishing time as 0 seconds and a burn length of less than 1 inch (2.54 cm) for a 12 second ignition.

A burnthrough test was conducted in a FAA certified lab for each of the examples. Each of the example burnthrough resistant laminate films were exposed to a flame for at least 10 minutes, and some were exposed to the flame for 15 minutes. Each of the examples showed no flame penetration and heat transfer was less than 2 BTU/ ft²s (23 kW/m²) in 4 minutes for each example.

It is to be appreciated that the previously disclosed examples are for illustrative purposes and are not meant to be limiting. Each of the burnthrough BTU/ft²s in 4 minutes for each example. resistant laminate films can be manufactured in a manner similar to the process disclosed in example one, the aforementioned disclosed embodiments, and hereinafter disclosed method of laminating a burnthrough resistant film.

### A Method of Laminating a Burnthrough Resistant Film

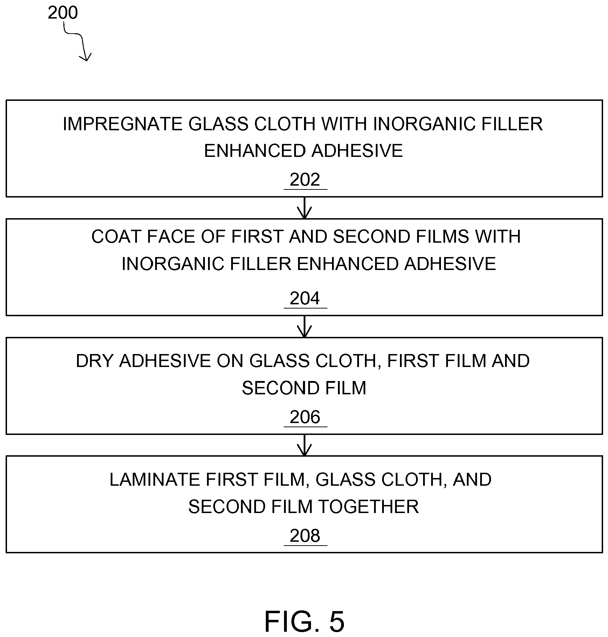

Referring to Figure 5, a flow chart illustrating a method or process 200 is shown. The method 200 can be implemented to laminate a burnthrough resistant film. Generally, the burnthrough resistant film can include a silicon dioxide cloth layer, a plurality of adhesive layers, a first film layer, and a second film layer.

In block 202, an inorganic filler enhanced adhesive can be impregnated into a high temperature resistant glass cloth. For instance, the adhesive can be coated on the glass cloth by one or more rollers. In another instance, the adhesive can be applied by dipping the glass cloth into a vat of the liquid adhesive. In one embodiment, the adhesive can be a non-reactive adhesive. For instance, the adhesive can be a drying adhesive. In another embodiment, the adhesive can be a self-crosslinking adhesive.

In one example, the adhesive can be a polymer dispersion adhesive where the adhesive is dispersed in a solvent (e.g., water). The adhesive can include one or more inorganic fillers. Generally, the inorganic filler can comprise 5-15% of a solid weight of the adhesive.

In some embodiments, the adhesive can be coated on a surface of the first film and a surface of the second film in block 204. In one embodiment, the adhesive can be coated on both surfaces of one of the films. For instance, the adhesive can be coated on both surfaces of the first film. In another embodiment, the adhesive can be coated on an outer surface of the burnthrough resistant film.

In block 206, the glass cloth, the first film, and the second film can be introduced to a heat source to dry the adhesive. Generally, water or other solvents can be removed from the adhesive as the adhesive dries.

In block 208, the impregnated glass cloth, the first film, and the second film can be thermally laminated together. Generally, the glass cloth can be sandwiched between the first film and the second film.

In one embodiment, the impregnated glass cloth can be sandwiched between the first film and the second film with the adhesive coated on a side of each film interfacing with the glass cloth. After the three layers are positioned, the glass cloth, the first film, and the second film can be compressed and heated by one or more rollers. For instance, the rollers can simultaneously heat and compress the three layers. Depending on an implementation, the rollers can be used to apply a specific amount of pressure to the three layers. It is to be appreciated that the pressure applied by the rollers can vary due to different thicknesses of the glass cloth. Generally, the pressure can be adjusted to achieve a pre-determined bonding strength.

In one embodiment, the rollers can have a surface temperature between 120-160 degrees Celsius. In another embodiment, the rollers can have a surface temperature between 140-150 degrees Celsius. Generally, the adhesive can be activated when heated by the rollers, thus causing the adhesive to bond the three layers together. It is to be appreciated that the rollers can be heated to a temperature needed to activate the adhesive.

### Alternative Embodiments and Variations

The various embodiments and variations thereof, illustrated in the accompanying Figures and/or described above, are merely exemplary.

## Claims

1. A burnthrough resistant laminate comprising:
a first film comprising polyetheretherketone;
a silicon dioxide cloth comprising silicon dioxide fibers;
a second film comprising polyetheretherketone; and
an adhesive compounded with at least one inorganic filler, wherein the silicon dioxide cloth is impregnated with the adhesive; and either
(i) the first film is a first layer;
the silicon dioxide cloth is a second layer and comprises at least 97 percent pure silicon dioxide fibers;
the second film is a third layer; and
the adhesive is located between (a) the first layer and the second layer and (b) the second layer and the third layer;
or
(ii) the first film is a polyetheretherketone film;
the silicon dioxide cloth comprises at least 94 percent pure silicon dioxide fibers;
the second film is a polyetheretherketone film; and
the at least one inorganic filler is selected from the group consisting of mica, vermiculite, ceramic fiber, titanium dioxide, fumed silica, and silica microfiber.

2. The burnthrough resistant laminate of claim 1(i), wherein the silicon dioxide fibers are bundled into a plurality of rovings, each roving having a linear mass density between 10-25 tex, and optionally the plurality of rovings are weaved in a plain weave.

3. The burnthrough resistant laminate of claim 1(i), wherein the adhesive is a drying adhesive.

4. The burnthrough resistant laminate of claim 1(i), wherein the at least one inorganic filler:
(i) is selected from the group consisting of mica, vermiculite, ceramic fibers, titanium dioxide, fumed silica, and silica microfiber; or
(ii) has a mesh size between 100-600 mesh (100-600 openings per 2.54 cm of mesh).

5. The burnthrough resistant laminate of claim 1(i), wherein the adhesive is compounded with at least two inorganic fillers selected from the group consisting of mica, vermiculite, ceramic fibers, titanium dioxide, fumed silica, and silica microfiber.

6. The burnthrough resistant laminate of claim 1(i), wherein the silicon dioxide cloth has an area weight between 96-109 g/m².

7. The burnthrough resistant laminate of claim 1(ii), wherein the silicon dioxide fibers are bundled into a plurality of rovings, each roving having a linear mass density between 10-25 tex.

8. The burnthrough resistant laminate of claim 1(ii), wherein the at least one inorganic filler has a mesh size between 100-600 mesh (100-600 openings per 2.54 cm of mesh).

9. The burnthrough resistant laminate of claim 1(ii), wherein the adhesive is compounded with at least two inorganic fillers selected from the group consisting of mica, vermiculite, ceramic fiber, titanium dioxide, fumed silica, and silica microfiber.

10. The burnthrough resistant laminate of claim 1(ii), wherein the first film has a thickness between 3-9 µm, and optionally the second film has a thickness between 3-9 µm.

## Patentansprüche

1. Durchbrennfestes Laminat, umfassend:
einen ersten Film, umfassend Polyetheretherketon;
einen Siliciumdioxid-Stoff, der Siliciumdioxidfasern umfasst;
einen zweiten Film, umfassend Polyetheretherketon; und
einen Kleber, der mit zumindest einem anorganischen Füller vermischt ist, wobei der Siliciumdioxid-Stoff mit dem Kleber imprägniert ist; und entweder
(i) ist der erste Film eine erste Schicht;
ist der Siliciumdioxid-Stoff eine zweite Schicht und umfasst zumindest 97 % reine Siliciumdioxidfasern;
ist der zweite Film eine dritte Schicht; und
befindet sich der Kleber zwischen (a) der ersten Schicht und der zweiten Schicht und (b) der zweiten Schicht und der dritten Schicht;
oder
(ii) ist der erste Film ein Polyetheretherketonfilm;
umfasst der Siliciumdioxid-Stoff zumindest 94 % reine Siliciumdioxidfasern;
ist der zweite Film ein Polyetheretherketonfilm; und
ist der zumindest eine anorganische Füller aus der aus Glimmer, Vermiculit, Keramikfaser, Titandioxid, pyrogenem Siliciumdioxid und Siliciumdioxidmikrofaser bestehenden Gruppe ausgewählt.

2. Durchbrennfestes Laminat nach Anspruch 1(i), wobei die Siliciumdioxidfasern in einer Vielzahl von Faserbündeln gebündelt sind, wobei jedes Faserbündel eine lineare Massedichte zwischen 10-25 tex aufweist und die Vielzahl von Faserbündeln gegebenenfalls in einer Leinwandbindung verwoben sind.

3. Durchbrennfestes Laminat nach Anspruch 1(i), wobei der Kleber ein trocknender Kleber ist.

4. Durchbrennfestes Laminat nach Anspruch 1(i), wobei der zumindest eine anorganische Füller:
(i) aus der aus Glimmer, Vermiculit, Keramikfasern, Titandioxid, pyrogenem Siliciumdioxid und Siliciumdioxidmikrofaser bestehenden Gruppe ausgewählt ist; oder
(ii) eine Mesh-Größe zwischen 100-600 Mesh (100-600 Öffnungen pro 2,54 cm Mesh) aufweist.

5. Durchbrennfestes Laminat nach Anspruch 1(i), wobei der Kleber mit zumindest zwei anorganischen Füllern vermischt ist, die aus der aus Glimmer, Vermiculit, Keramikfasern, Titandioxid, pyrogenem Siliciumdioxid und Siliciummikrofaser bestehenden Gruppe ausgewählt sind.

6. Durchbrennfestes Laminat nach Anspruch 1(i), wobei der Siliciumdioxid-Stoff ein Flächengewicht zwischen 96-109 g/m² aufweist.

7. Durchbrennfestes Laminat nach Anspruch 1(ii), wobei die Siliciumdioxidfasern in einer Vielzahl von Faserbündeln gebündelt sind, wobei jedes Faserbündel eine lineare Massendichte zwischen 10-25 tex aufweist.

8. Durchbrennfestes Laminat nach Anspruch 1(ii), wobei der zumindest eine anorganische Füller eine Mesh-Größe zwischen 100-600 Mesh (100-600 Öffnungen pro 2,54 cm Mesh) aufweist.

9. Durchbrennfestes Laminat nach Anspruch 1(ii), wobei der Kleber mit zumindest zwei anorganischen Füllern vermischt ist, die aus der aus Glimmer, Vermiculit, Keramikfaser, Titandioxid, pyrogenem Siliciumdioxid und Siliciumdioxidmikrofaser bestehenden Gruppe ausgewählt sind.

10. Durchbrennfestes Laminat nach Anspruch 1(ii), wobei der erste Film eine Dicke zwischen 3-9 µm aufweist und der zweite Film gegebenenfalls eine Dicke zwischen 3-9 µm aufweist.

## Revendications

1. Stratifié résistant à la propagation du feu de manière traversante, comprenant :
un premier film comprenant de la polyétheréthercétone ;
un tissu de dioxyde de silicium comprenant des fibres de dioxyde de silicium ;
un second film comprenant de la polyétheréthercétone ; et
un adhésif composé d'au moins une charge inorganique, dans lequel le tissu en dioxyde de silicium est imprégné de l'adhésif ; et soit
(i) le premier film est une première couche ;
le tissu de dioxyde de silicium est une deuxième couche et comprend au moins 97 % de fibres de dioxyde de silicium pur ;
le second film est une troisième couche ; et
l'adhésif est situé entre (a) la première couche et la deuxième couche et (b) la deuxième couche et la troisième couche ;
ou
le premier film est un film de polyétheréthercétone ;
le tissu de dioxyde de silicium comprend au moins 94 % de fibres de dioxyde de silicium pur ;
le second film est un film de polyétheréthercétone ; et
la au moins une charge minérale est choisie dans le groupe comprenant mica, vermiculite, fibre de céramique, dioxyde de titane, silice pyrogénée et microfibre de silice.

2. Stratifié résistant à la propagation du feu de manière traversante selon la revendication 1(i), dans lequel les fibres de dioxyde de silicium sont groupées en une pluralité de stratifils, chaque stratifil ayant une densité massique linéaire entre 10 et 25 tex, et facultativement la pluralité de stratifils sont tissés en une armure toile.

3. Stratifié résistant à la propagation du feu de manière traversante, selon la revendication 1(i), dans lequel l'adhésif est un adhésif de séchage.

4. Stratifié résistant à la propagation du feu de manière traversante selon la revendication 1(i), dans lequel la au moins une charge minérale :
(i) est choisi dans le groupe comprenant mica, vermiculite, fibres de céramique, dioxyde de titane, silice pyrogénée et microfibre de silice ; ou
(ii) a une taille de maille comprise entre 100 et 600 (100 à 600 ouvertures par 2,54 cm de mailles).

5. Stratifié résistant à la propagation du feu de manière traversante selon la revendication 1(i), dans lequel l'adhésif est composé d'au moins deux charges minérales choisies dans le groupe comprenant mica, vermiculite, fibres de céramique, dioxyde de titane, silice pyrogénée et microfibre de silice.

6. Stratifié résistant à la propagation du feu de manière traversante selon la revendication 1(i), dans lequel le tissu de dioxyde de silicium a un grammage compris entre 96 et 109 g/m².

7. Stratifié résistant à la propagation du feu de manière traversante selon la revendication 1(ii), dans lequel les fibres de dioxyde de silicium sont groupées en une pluralité de stratifils, chaque stratifil ayant une densité massique linéaire comprise entre 10 et 25 tex.

8. Stratifié résistant à la propagation du feu de manière traversante selon la revendication 1(ii), dans lequel la au moins une charge minérale a une taille de maille comprise entre 100 et 600 (100 à 600 ouvertures par 2,54 cm de mailles).

9. Stratifié résistant à la propagation du feu de manière traversante selon la revendication 1(ii), dans lequel l'adhésif est composé d'au moins deux charges inorganiques choisies dans le groupe comprenant mica, vermiculite, fibres de céramique, dioxyde de titane, silice pyrogénée et microfibre de silice.

10. Stratifié résistant à la propagation du feu de manière traversante selon la revendication 1(ii), dans lequel le premier film a une épaisseur comprise entre 3 et 9 pm, et facultativement le second film a une épaisseur comprise entre 3 et 9 µm.
